# EUROPEAN PATENT SPECIFICATION

(11) **EP 1 589 859 B1**
(45) Date of publication and mention of the grant of the patent: **23.01.2008**
(21) Application number: 04708958.6
(22) Date of filing: 06.02.2004
(51) Int. Cl.: A47J 31/56, A47J 31/18, A47J 31/44

(54) **A COFFEE MACHINE**
KAFFEEMASCHINE
MACHINE A CAFE

(30) Priority: 07.02.2003 TR 200300199
(43) Date of publication of application: 02.11.2005
(73) Proprietor: Arçelik Anonim Sirketi, 34950 Istanbul (TR)
(72) Inventor: HASANREISOGLU, Ali Levent, Arcelik Anonim Sirketi, Istanbul, 34950 (TR); GUCLU, Yusuf, Arcelik Anonim Sirketi, Istanbul, 34950 (TR); BAYKALER, Halit, Arcelik Anonim Sirketi, Istanbul, 34950 (TR)
(86) International application number: PCT/TR2004/000005
(87) International publication number: WO 2004/069013

(56) References cited:
- GB-A- 1 367 354
- GR-B- 1 003 987
- US-A1- 2001 052 293

## Description

This invention relates to an automatic coffee machine for the preparation of Turkish coffee.

In the state of art, water heated in a pot of the machine is poured in drops on the finely-ground coffee in another pot and the sugar is added as much as desired following the filtration of coffee and water mixture. If finely-ground coffee which can be entirely melt in water is used, means for the direct mixture of coffee with water and sugar are accordingly used. These machines have not manufactured particularly for the preparation of Turkish coffee, therefore the coffee prepared in this way differs from Turkish coffee in terms of its flavor. In order to make Turkish coffee, the mixture obtained from the addition of finely-ground Turkish coffee, sugar powder and cold water in defined ratios to a heating pot having a wide bottom surface similar to a coffee pot is stirred efficiently, heated and served in the cups with scum before it reaches at the boiling level. Consequently, the method of coffee making in an automatic coffee machine should be similar with the conventional methods to have the same flavor and prospects. There are several Turkish coffee machines manufactured by utilizing from conventional coffee making methods; however they do not provide the flavor and density that the consumers of Turkish coffee require.

In TR199501348B, coffee and sugar added through the hopper is stirred by a stirring device and served to the cups by means of the service motor.

In IT1243191, coffee, sugar and water in separate pots in defined ratios are blended in to the same pot, stirred, heated and dispensed into a cup by means of a solenoid valve.

In JP56100025, boiler is designed not to exceed a certain temperature in accordance with the principle that Turkish coffee is served prior to being boiled.

In TR200100549, an automatic boiling controlled coffee machine wherein the boiler is fixed onto a swing is disclosed.

In GR1003987B a coffee machine is disclosed, which is considered to represent the closest prior art.

The object of this invention is to provide a coffee machine which makes Turkish coffee in a short time with its traditional flavor and facilitates the use for the user.

The coffee machine realized in order to attain above mentioned objects of the present invention has been illustrated in the attached drawings, wherein;

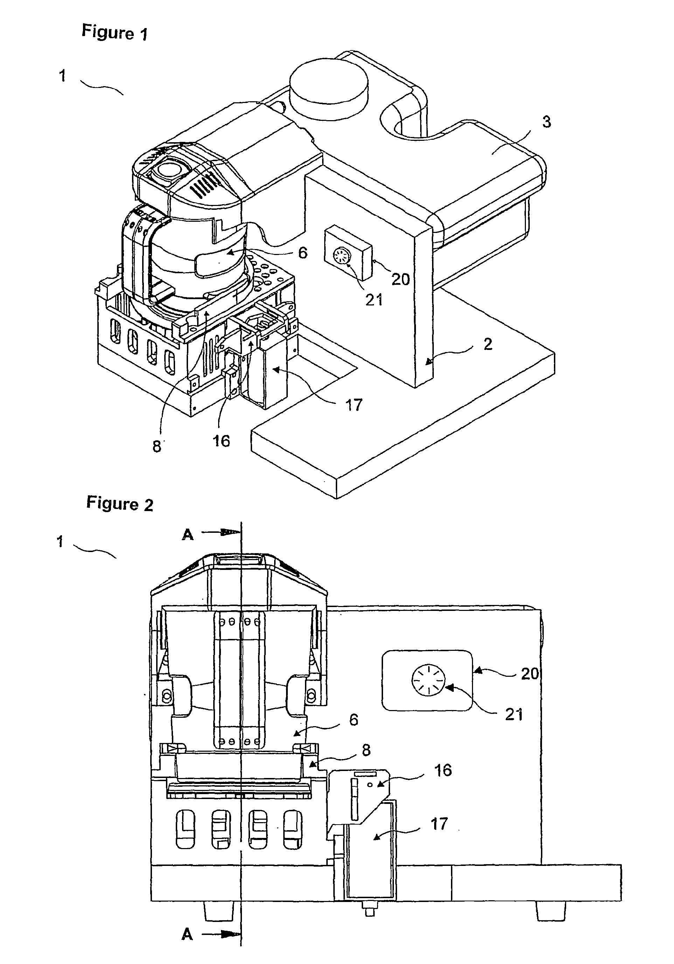

Figure 1 is a perspective view of a coffee machine.
Figure 2 is a front view of a coffee machine.

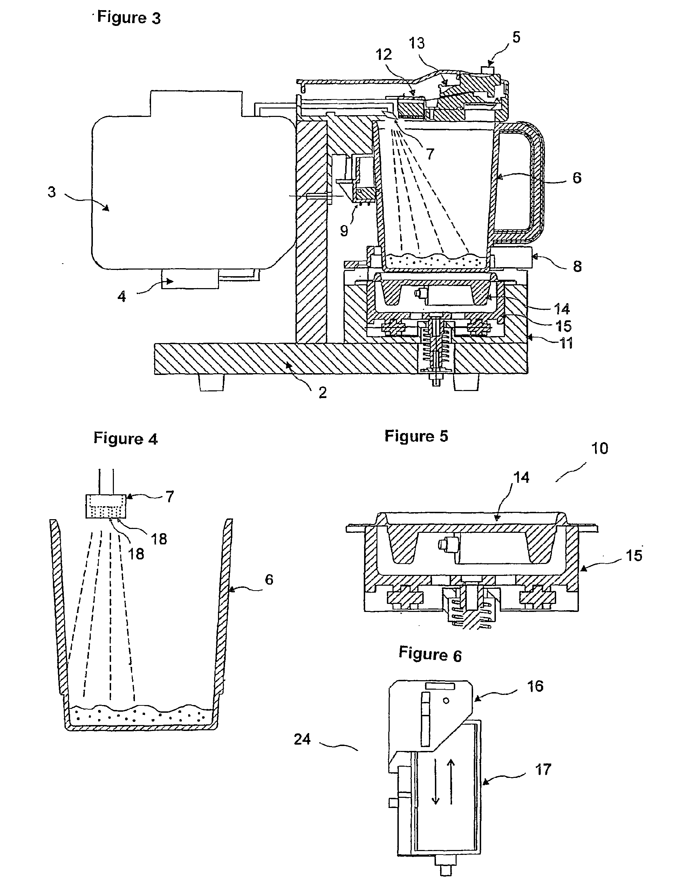

Figure 3 is A-A cross sectional view of a coffee machine.
Figure 4 is a schematic view of a boiling pot and an spraying nozzle.
Figure 5 is a cross sectional view of a heating group.
Figure 6 is a detailed view of a lifting mechanism.

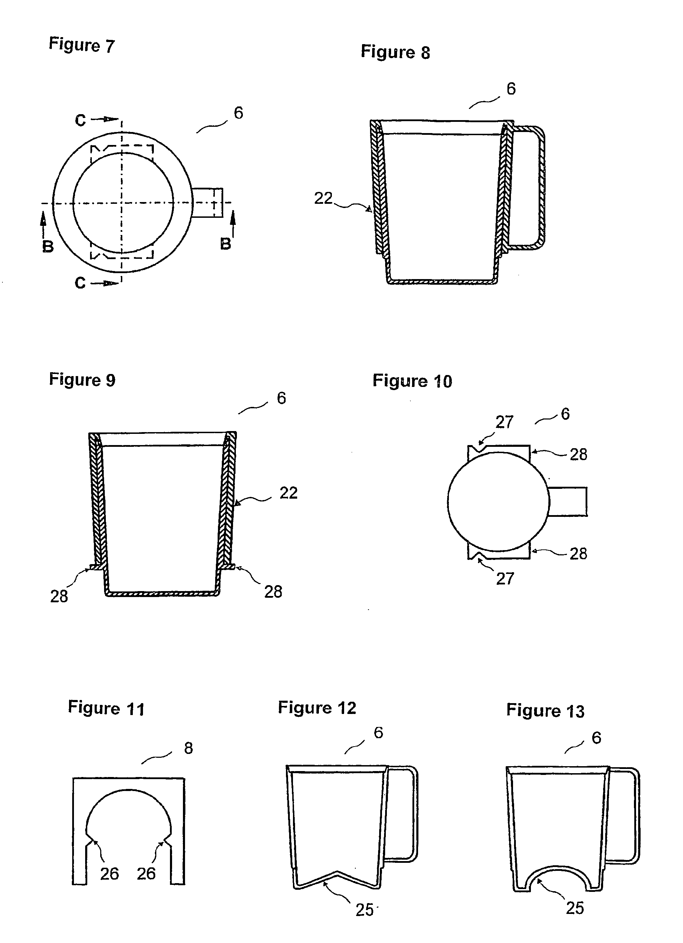

Figure 7 is a top view of a boiling pot.
Figure 8 is B-B cross sectional view of a boiling pot.
Figure 9 is C-C cross sectional view of a boiling pot.
Figure 10 is a bottom view of a boiling pot.
Figure 11 is a top schematic view of a rail.
Figure 12 is a schematic view of a boiling pot comprising a conical bottom.
Figure 13 is a schematic view of a boiling pot comprising a circular bottom.

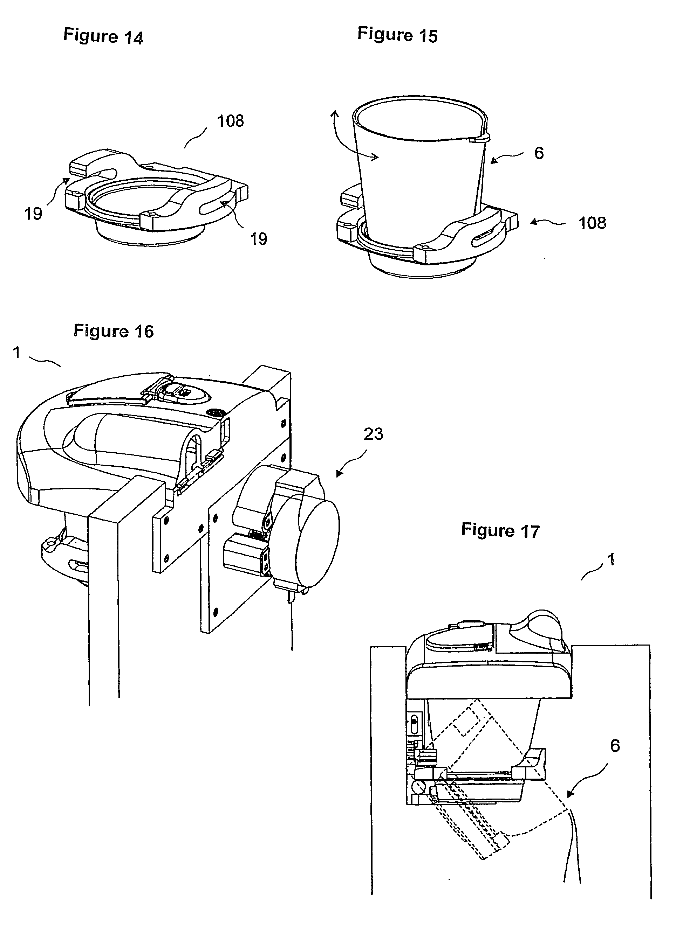

Figure 14 is a perspective view of a rail comprising more than one assembly slot.
Figure 15 is a perspective view of a boiling pot mounted on a rail.
Figure 16 is a detailed perspective view of a coffee machine comprising a tilting mechanism.
Figure 17 is a schematic view of a tilting position of a boiling pot in a coffee machine comprising a tilting mechanism.
Figure 18 is a perspective view of a coffee machine comprising more than one boiling pot in which each unit is controlled separately.
Figure 19 is a perspective view of a coffee machine comprising more than one boiling pot in which all units are controlled centrally.

The components shown in the figures have been enumerated as below;
1. Coffee machine
2. Body
3. Water tank
4. Pump
5. Start-up button
6. Boiling pot
7. Spraying nozzle
8, 108. Rail
9. Proximity sensor
10. Heating group
11. Lower body
12. Infrared sensor
13. Vapor thermostat
14. Heater
15. Tray
16. Pressure arm
17. Solenoid
18. Water jet opening
19. Slot
20. Control unit
21. Selection knob
22. Insulation material
23. Tilting mechanism
24. Lifting mechanism
25. Bottom
26. Projection
27. Recess
28. Base

The coffee machine (1) comprises a body (2), a water tank (3) which can be attached and removed, and one or more boiling pot (6) in winch coffee, sugar and other materials are added, a pump (4) which conveys the water in the water tank (3) to the boiling pot (6), a start-up button (5), one or more spraying nozzle (7) providing the mixture of coffee and sugar in the boiling pot (6) by means of a water jet conveyed by the pump (4), a rail (8) on which the boiling pot (6) is placed and moves when being attached and removed from the coffee machine (1), a proximity sensor (9) which detects the placement of the boiling pot (6) in the coffee machine, a heating group (10) which contact with the bottom of the boiling pot (6) during the certain boiling period and is removed following this period, a lower body (11) on which the heating group (10) is placed, a lifting mechanism (24) providing the beginning and end of the boiling process by the way of actuating the heating group (10) upwards and downwards directions respectively, an infrared sensor (12) which determines the boiling by the detection of the height of scum from the material boiled in the boiling pot (6) and a vapor thermostat (13) which ends the boiling process for security purposes.

The heating group (10) comprises a heater (14) which contacts with the boiling pot (6) and boils during the boiling process, and a tray (15) which protects the heater (14).

The lifting mechanism (24) comprises a pressure arm (16) which provides the connection with the heating group (10) and a solenoid (17) which provides the contact of the heater (14) with the bottom of the boiling pot (6) by a certain pressure force by moving in upwards direction at the beginning of the boiling process and the removal of the heater (14) from the bottom of the boiling pot (6) by moving in downwards direction at the end of the boiling process.

In the coffee machine (1) which is the subject of this invention, during the boiling process, the heater (14) contacts with the bottom surface of the boiling pot (6) and its contact is immediately cut following the completion of the boiling process. The best boiling method providing the best coffee quality is to boil the boiling pot (6) from the bottom side. As the contact of the heater (14) with the boiling pot (6) immediately cut after the completion of the boiling process, the effect of the thermal inertia of the heater (14) on the boiled materials is avoided for the prevention of excessive boiling and overflow of the coffee.

The spraying nozzle (7) comprises one or more water jet opening (18) which provides the mixture of the materials like coffee and sugar with the water before the boiling process and water jet constantly with strikes or bubbles from the center to the sides over the radius assumed to be on the bottom of the boiling pot (6) and a homogenous mixture by means of the water strike and circulation.

The rail (8) comprises one or more projection (26) providing its balanced stand by slightly holding the boiling pot (6) when partially pulled.

The boiling pot (6) comprises one or more base (28) consisting of one or more recess (27) which provides the placement on the rail (8) and its motion forward and backward, and prevents slightly the pull by placing the projection (26) completely and an insulation material (22) providing direct drink of the warm liquid directly from the boiling pot (6) by preventing the parts which the users contact from being boiled.

In order to prepare Turkish coffee, the boiling pot (6) is partially pulled and coffee and sugar are added in certain amounts. The boiling pot (6) is pushed in its place. If the boiling pot (6) is not pulled entirely in its place, the proximity sensor (9) do not allow the start of the water taking and boiling processes. After the boiling pot (6) is placed, the start-up button (5) is pressed. The pump (4) operates and transfers the water from the water tank (3) to the boiling pot (6). The water and sugar are efficiently mixed by means of the water jet obtained from the spraying nozzle (7). In order to start the boiling process, solenoid (17) presses the heater (14) towards the bottom surface of the boiling pot (6) by moving the heating group (10) in upwards direction by means of the pressure arm (16). The boiling process starts. When required temperature is achieved, scum on the Turkish coffee starts to rise. Infrared sensor (12) detects the change in the height of scum and decides for boiling. When the infrared sensor (12) decides for boiling, the current towards the heating group (10) is cut and solenoid (17) splits the heater (14) from the bottom surface of the boiling pot (6) by means of the pressure arm (16). In case the infrared sensor (12) can not function regularly due to any reason, vapor thermostat (13) ends the boiling process. The user pulls the boiling pot (6) over the rail (8) and serves to the cups. Afterwards the boiling pot (6) is washed for being reused.

In one embodiment of the invention, the coffee machine (1) comprises a control unit (20) which applies the boiling algorithm for boiling water, heating milk, boiling milk, preparing coffee varieties and fulfilling similar functions in addition to the preparation of Turkish coffee and a selection knob (21) which selects with respect to the beverage desired.

In another embodiment of the invention, the coffee machine (1) comprises a rail (108) having one or more slot (19) providing the assembly of the boiling pot (6).

In another embodiment of the invention, the coffee machine (1) comprises a tilting mechanism (23) which tilts the boiling pot (6) and pours the coffee in a cup or glass automatically at the end of the boiling process.

In another embodiment of the invention, the boiling pot (6) comprises a bottom (25) having a wider surface preferably in a conical or circular shape for the increase of the surface which contacts with the heater (14) and place the heater (14) entirely to boil the Turkish coffee in a quick and better manner.

The coffee machine (1) which is the subject of the invention can be mounted on a table or a wall.

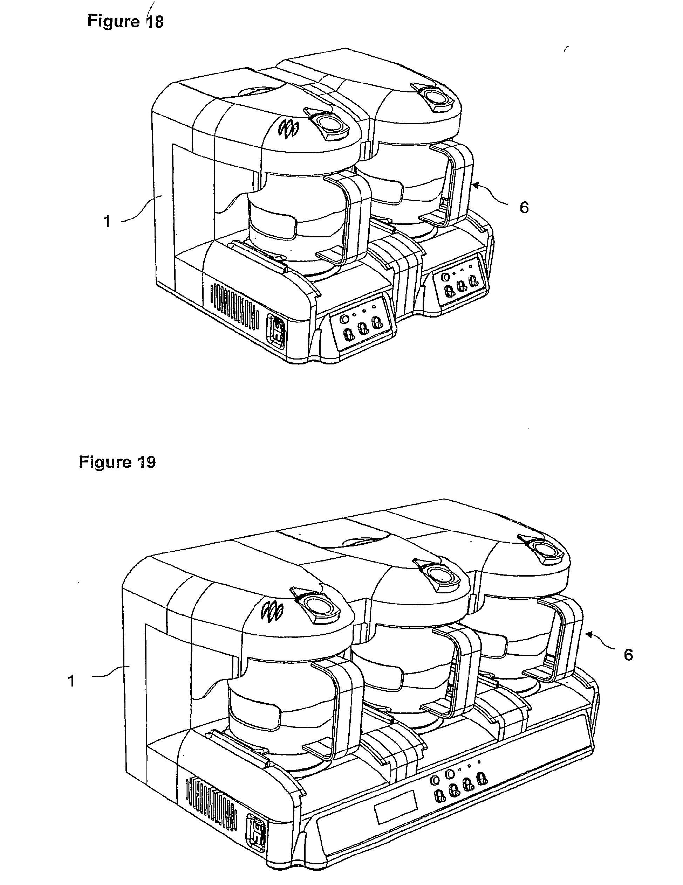

The coffee machine (1) which is the subject of the invention has a suitable structure for preparing Turkish coffee for several people at the same time. Each unit may be controlled separately (Figure 18) or a control center may be provided for all units in the coffee machine (1) comprising more than one boiling pot (6), heating groups (10) and a lifting mechanism (24).

As the coffee machine (1) which is the subject of the invention completes the boiling process of Turkish coffee in 1 - 1.5 minute, it has a significant advantage for the conventional methods in terms of time factor. Furthermore the overflow of the scum on the Turkish coffee is prevented in this coffee machine (1) that it does not require to be controlled for overflow during the operation.

The required amount of coffee, water and sugar as desired are mixed homogenously prior boiling by means of the fitting placement of the spraying nozzle (7) and water ejected through the water jet openings (18).

The coffee machine is easy to use and clean as the boiling pot (6) is not integrated with the heating members like the resistance and can be easily attached and removed.

## Claims

1. A coffee machine (1) comprising a body (2), a water tank (3) which can be attached and removed, a pump (4) which transfers the water in the water tank and one or more boiling pot (6) in which coffee and sugar are added and a heating group (10) comprising a heater (14) which is provided to contact with the bottom surface of the boiling pot (6) during the boiling period and remove from thereof following the boiling period and a lifting mechanism (24) which starts and ends the boiling process by means of actuating the heating group (10) in upwards and downwards directions respectively, **characterized by** an infrared sensor (12) which decides for boiling by detecting the change in the height of the scum of the material boiled in the boiling pot (6) and the heater (14) which splits from the bottom surface of the boiling pot (6) when the infrared sensor (12) decides for boiling.

2. A coffee machine (1) as defined in Claim 1 **characterized by** the heating group (10) comprising a tray (15) which protects the heater (14).

3. A coffee machine (1) as defined in Claim 1 and 2 **characterized by** a lifting mechanism (24) comprising a pressure arm (16) which provides connection with the heating group (10) and a solenoid (17) which provides the contact of the heater (14) with the bottom surface of the boiling pot (6) by a pressure force in upwards motion at the beginning of the boiling process and removes the heater (14) from the bottom surface of the boiling pot (6) by a downwards motion at the end of the boiling process.

4. A coffee machine (1) as defined in any of the Claims above **characterized by** one or more spraying nozzle (7) which provides the mixture of coffee and sugar in the boiling pot (6) by means of the water jet.

5. A coffee machine (1) as defined in Claim 4 **characterized by** spraying nozzle (7) comprising one or more water jet opening (18) which provides the mixture of the coffee and sugar in the boiling pot (6) with the water before the boiling process and water jet constantly with strikes or bubbles from the center to the sides over the radius assumed to be on the bottom of the boiling pot (6) and a homogenous mixture by means of the water strike and circulation.

6. A coffee machine (1) as defined in any of the Claims above **characterized by** a vapor thermostat (13) which ends the boiling process for safety when necessary.

7. A coffee machine (1) as defined in any of the Claims above **characterized by** a rail (8, 108) on which the boiling pot (6) is placed and coffee machine (1) moves when being attached and removed.

8. A coffee machine (1) as defined in Claim 7 **characterized by** a rail (8) comprising one or more projection (26) which enable the boiling pot (6) stand in balance when being slightly pulled.

9. A coffee machine (1) as defined in Claim 8 **characterized by** a boiling pot (6) comprising one or more base (28) having one or more recess (27) which provides the boiling pot (6) being placed on the rail (8) and moving in forward and backward direction, and prevents being pulled more by means of the projections (26) fit when being partially pulled.

10. A coffee machine (1) as defined in Claim 8 **characterized by** a rail (108) comprising one or more slot (19) which provides the assembly of the boiling pot (6).

11. A coffee machine (1) as defined in any of the Claims above **characterized by** a proximity sensor (9) which detects the placement of the boiling pot (6) in the coffee machine (1).

12. A coffee machine (1) as defined in any of the Claims above **characterized by** a boiling pot (6) comprising having a wider bottom surface preferably in a conical or circular shape for the increase of the surface which contacts with the heater (14) and place the heater (14) entirely to boil the Turkish coffee in a quick and better manner.

## Patentansprüche

1. Kaffeemaschine (1), umfassend einen Grundkörper (2), einen Wassertank (3), der befestigt und entfernt werden kann, eine Pumpe (4), die das Wasser im Wassertank transportiert, und einen oder mehrere Brühkessel (6), in dem oder denen Kaffee und Zucker hinzugefügt werden, und eine Heizgruppe (10) mit einer Heizeinrichtung (14), die dazu vorgesehen ist, während der Brühperiode in Kontakt mit der Bodenfläche des Brühkessels (6) zu stehen, und nach der Brühperiode davon entfernt zu werden, und einen Hebemechanismus (24), der den Brühvorgang durch Betätigen der Heizgruppe (10) in Auf- und Abwärtsrichtung startet und beendet, **gekennzeichnet durch** einen Infrarotsensor (12), der über ein Brühen entscheidet, indem er eine Veränderung der Höhe des Schaums des im Brühkessel (6) gebrühten Materials detektiert, und **dadurch**, dass sich die Heizeinrichtung (14) von der Bodenfläche des Brühkessels (6) löst, wenn der Infrarotsensor (12) sich für das Brühen entscheidet.

2. Kaffeemaschine (1) nach Anspruch 1, **dadurch gekennzeichnet, dass** die Heizgruppe (10) ein Fach (15) umfasst, das die Heizeinrichtung (14) schützt.

3. Kaffeemaschine (1) nach Anspruch 1 und 2, **dadurch gekennzeichnet, dass** der Hebemechanismus (24) einen Druckarm (16) umfasst, der eine Verbindung mit der Heizgruppe (10) bereitstellt, und einen Solenoid (17), der durch eine aufwärts gerichtete Druckkraft zu Beginn des Brühvorgangs den Kontakt der Heizeinrichtung (14) mit der Bodenfläche des Brühkessels (6) bereitstellt, und durch eine Abwärtsbewegung zum Ende des Brühvorgangs die Heizeinrichtung (14) von der Bodenfläche des Brühkessels (6) entfernt.

4. Kaffeemaschine (1) nach einem der vorangehenden Ansprüche, **gekennzeichnet durch** eine oder mehrere Sprühdüsen (7), die mit Hilfe eines Wasserstrahls das Gemisch aus Kaffee und Zucker im Brühkessel (6) bereitstellen.

5. Kaffeemaschine (1) nach Anspruch 4, **dadurch gekennzeichnet, dass** die Sprühdüse (7) eine oder mehrere Wasserstrahlöffnungen (18) umfasst, die vor dem Brühvorgang das Gemisch aus Kaffee und Zucker im Brühkessel (6) mit dem Wasser bereitstellen, wobei sie das Wasser konstant in Strahlen oder Blasen von der Mitte zu den Seiten über den Radius hinweg abgeben, der am Boden des Brühkessels (6) vorliegt, und die durch den Wasserstrahl und durch Zirkulation ein homogenes Gemisch bereitstellen.

6. Kaffeemaschine (1) nach einem der vorangehenden Ansprüche, **gekennzeichnet durch** ein Dampfthermostat (13), das bei Bedarf aus Sicherheitsgründen den Brühvorgang beendet.

7. Kaffeemaschine (1) nach einem der vorangehenden Ansprüche, **gekennzeichnet durch** eine Schiene (8, 108), an der der Brühkessel (6) angeordnet ist, und an der sich die Kaffeemaschine (1) bewegt, wenn sie befestigt und entfernt wird.

8. Kaffeemaschine (1) nach Anspruch 7, **dadurch gekennzeichnet, dass** die Schiene (8) einen oder mehrere Vorsprünge (26) umfasst, die es ermöglichen, dass der Brühkessel (6) schwankungsfrei steht, wenn er leicht herausgezogen wird.

9. Kaffeemaschine (1) nach Anspruch 8, **dadurch gekennzeichnet, dass** der Brühkessel (6) eine oder mehrere Grundplatten (28) umfasst, die eine oder mehrere Vertiefungen (27) aufweisen und vorsehen, dass der Brühkessel (6) auf der Schiene (8) angeordnet wird und sich vor und zurück bewegt, und mit Hilfe der Arretierung durch die Vorsprünge (26) verhindert, dass er weiter herausgezogen wird, wenn er teilweise herausgezogen wird.

10. Kaffeemaschine (1) nach Anspruch 8, **dadurch gekennzeichnet, dass** die Schiene (108) einen oder mehrere Schlitze (19) umfasst, die das Montieren des Brühkessels (6) ermöglichen.

11. Kaffeemaschine (1) nach einem der vorangehenden Ansprüche, **gekennzeichnet durch** einen Umgebungssensor (9), der das Anordnen des Brühkessels (6) in der Kaffeemaschine (1) detektiert.

12. Kaffeemaschine (1) nach einem der vorangehenden Ansprüche, **dadurch gekennzeichnet, dass** der Brühkessel (6) eine größere Bodenfläche mit einer vorzugsweise konischen oder kreisförmigen Form aufweist, damit so eine größere Fläche vorliegt, um in Kontakt mit der Heizeinrichtung (14) zu gelangen, und die Heizeinrichtung (14) vollständig angeordnet wird, um türkischen Kaffee schnell und mit höherer Qualität zu brühen.

## Revendications

1. Une machine à café (1) comprenant un corps (2), une réserve d'eau (3) détachable, une pompe (4) qui transmet l'eau dans la réserve d'eau, un ou plusieurs pot de bouillissage (6) dans lequel sont ajoutés le café et le sucre, un groupe de chauffage (10) comprenant un appareil de chauffage (14) qui se met en contact avec la surface inférieure du pot de bouillissage (6) pendant la période de bouillissage et qui se détache de ladite surface après la période de bouillissage, et un mécanisme de démarrage (24) qui démarre et termine le processus de bouillissage en activant le groupe de chauffage (10) vers le haut et le bas respectivement, **caractérisée par** un capteur infrarouge (12) qui décide d'arrêter le bouillissage en détectant le changement d'hauteur de l'écume de la matière bouillie dans le pot de bouillissage (6) et l'appareil de chauffage (14) qui se sépare de la surface inférieure du pot de bouillissage (6) lorsque le capteur infrarouge (12) décide de bouillir.

2. Une machine à café (1) selon la revendication 1, **caractérisée par** un groupe de chauffage (10) comprenant un plateau (15) qui protège l'appareil de chauffage (14).

3. Une machine à café (1) selon les revendications 1 et 2, **caractérisée par** un mécanisme de démarrage (24) comprenant un manche de pression (16) qui assure la connexion entre le groupe de chauffage (10) et une bobine (17) liée à l'appareil de chauffage (14) avec la surface inférieure du pot de bouillissage (6), en appliquant une pression vers le haut tout au début du processus de bouillissage et qui détache l'appareil de chauffage (14) de la surface inférieure du pot de bouillissage (6) en appliquant une pression vers le bas juste à la fin du processus de bouillissage.

4. Une machine à café (1) selon l'une quelconque des revendications en haut, **caractérisée par** un ou plusieurs embout de pulvérisation (7) qui assure le mélange du café et du sucre dans le pot de bouillissage (6) à l'aide du jet d'eau.

5. Une machine à café (1) selon la revendication 4, **caractérisée par** un embout de pulvérisation (7) comprenant uns ou plusieurs ouverture de jet d'eau (18) qui assure le mélange du café et du sucre dans le pot de bouillissage (6) avec de l'eau avant le processus de bouillissage et le jet d'eau constant avec des frappements et des bulles, à partir du centre des côtés du cercle formé en bas du pot de bouillissage (6) et un mélange homogène à l'aide des frappements d'eau et de la circulation.

6. Une machine à café (1) selon l'une quelconque des revendications en haut, **caractérisée par** un thermostat de vapeur (13) qui arrêterait le processus de bouillissage en toute sécurité en cas de nécessité.

7. Une machine à café (1) selon l'une quelconque des revendications en haut, **caractérisée par** un rail (8, 108) sur lequel le pot de bouillissage (6) est placé et la machine à café (1) peut bouger à l'état attaché et détaché.

8. Une machine à café (1) selon la revendication 7, **caractérisée par** un rail (8) comprenant une ou plusieurs saillie (26) qui assure la tenue équilibrée du pot de bouillissage (6) lorsqu'il est légèrement tiré.

9. Une machine à café (1) selon la revendication 8, **caractérisée par** un pot de bouillissage (6) comprenant une ou plusieurs base (28) munie d'un ou plusieurs enfoncement (27) qui sert à installer le pot de bouillissage (6) sur le rail (8) et à le bouger vers l'avant et l'arrière, et qui l'empêche d'être tiré à l'aide de plusieurs saillies (26) lorsqu'il est partialement tiré.

10. Une machine à café (1) selon la revendication 8, **caractérisée par** un rail (108) comprenant un ou plusieurs emplacements (19) qui permet l'assemblage du pot de bouillissage (6).

11. Une machine à café (1) selon l'une quelconque des revendications en haut, **caractérisée par** un capteur de proximité (9) qui détecte la position du pot de bouillissage (6) dans la machine à café (1).

12. Une machine à café (1) selon l'une quelconque des revendications en haut, **caractérisée par** un pot de bouillissage (6) comprenant une surface inférieure plus large de préférence en forme conique ou circulaire pour augmenter la surface de contact avec l'appareil de chauffage (14) et pour pouvoir placer l'appareil de chauffage (14) entièrement dans le but de préparer du café turc d'une manière plus rapide et meilleure.
